# EUROPEAN PATENT SPECIFICATION

(11) **EP 3 679 407 B1**
(45) Date of publication and mention of the grant of the patent: **09.11.2022**
(21) Application number: 18779867.3
(22) Date of filing: 06.09.2018
(51) Int. Cl.: G01V 5/10, G01V 5/12

(54) **REAL-TIME OUTPUT CORRECTION OF DETECTOR OUTPUTS RESULTING FROM AZIMUTHAL X-RAY SOURCE VARIATIONS USING MONITORING DETECTORS**
ECHTZEIT KORREKTUR DES DETEKTORAUSGANGS BEI AZIMUTHALEN VARIATIONEN DER X-STRAHLEN QUELLE MIT ÜBERWACHUNGSDETEKTOREN
CORRECTION EN TEMPS REELLE DE LA SORTIE DE DETECTEUR DANS DES VARIATIONS AZIMUTALES DE LA SOURCE DE RAYONNEMENTS X AVEC DES DETECTEURS DE SURVEILLANCE

(30) Priority: 06.09.2017 US 201762554797 P
(43) Date of publication of application: 15.07.2020
(73) Proprietor: Teague, Philip, Spring, TX 77386 (US); Stewart, Alex, San Francisco, CA 94132 (US)
(72) Inventor: Teague, Philip, Spring, TX 77386 (US); Stewart, Alex, San Francisco, CA 94132 (US)
(74) Representative: Schneiders & Behrendt Bochum
(86) International application number: PCT/US2018/049718
(87) International publication number: WO 2019/051066

(56) References cited:
- WO-A1-2013/101978
- US-A1- 2016 274 038
- US-A1- 2017 052 275
- US-A1- 2017 169 909

## Description

### Technical Field

The present invention relates generally to the correction of azimuthal formation, borehole and cement measurements based upon variations of the azimuthal distribution of output radiation of an electronic radiation source, and in a particular though non-limiting embodiment to a method and means to use the detected output of multiple azimuths of a non-isotope-based radiation source tube disposed within a borehole logging tool to determine accurate, constant corrections to be substituted during the computation of detector count-rate output prior to, or during, computation of the density of materials surrounding the tool.

### Background

Well or borehole logging is the practice of making an accurate record, known as a well log, of the geologic formations through which a borehole creates a path or conduit. Well logging activities are performed during all phases of an oil and gas well's development: drilling and evaluation, completion, production and abandonment.

The oil and gas industry logs rock and fluid properties to find hydrocarbon-bearing strata in the formations intersected by a borehole. The logging procedure consists of lowering a tool on the end of a wireline into the well to measure the properties of the formation. An interpretation of these measurements is then made to locate and quantify potential zones containing hydrocarbons and the specific depths at which these zones exist.

When considering the current state of the art in borehole logging tool technology, the formation-facing detectors are calibrated through the use of small radioisotopes which are located within the detector assembly. Radio-isotopes such as ¹³⁷Cs are employed due to the dominant and narrow energy peaks which do not contribute greatly to the output count rate of the detector but can be actively used as an energy marker by the detector electronics to modify the gain control voltage of the photomultiplier tube such that the output is stabilized against temperature variations and other environmental factors.

However, currently available borehole logging tools employ a primary radiation source to illuminate the formation surrounding the borehole. Due to the relatively long half-life of the radioactive isotopes employed as primary radiation sources, their output is highly stable and predictable over the period of a borehole logging operation, the exact output of the isotope can be measured at surface prior to the operation to use as a reference point. As a result of the highly stable output of the primary radiation source, and the gain stabilization control isotope method employed within the detector systems, the only two major variants in the statistical output of the formation-facing detectors are the:
a) change in scattering and attenuation properties of the formation itself; and
b) the offset of the detectors from the borehole wall, which introduces 'direct' radiation from the primary source being counted by the detectors as a result of borehole propagation of the primary radiation through the borehole fluid between the primary source and the detector.

The former being the desired measurement and the latter being compensated for by using more than one detector, each linearly offset along the longitudinal direction of the borehole from the primary source.

If x-ray source tubes are used as a replacement for the radio-active isotope, instabilities are introduced into the output of the source. Typically, the output of an x-ray source can be controlled by means of an electrical feedback loop, consisting of a sensing circuit connected to the highest voltage stage of the high voltage power supply, which is then used to regulate the input voltage of a high voltage power supply with the goal of stabilizing the supply voltage of an x-ray tube or ion-tube (such as a Pulsed Neutron Generator).

In borehole cement evaluation logging, for example, it is imperative to ensure the greatest possible accuracy of data, whereby any variation in that data is a result of the change in scattering and attenuation properties of the materials surrounding the tool (formation density) or controllable borehole effects, such as an eccentric tool disposed within said borehole.

When using electronic radiation emitting source tubes as a replacement for radio-active isotope-based radiation sources, an inherent variability is introduced into the measurement due to the unstable nature of the output of the source tube and its power supply - an issue which is not encountered during the use of highly stable long half-life radio isotopes. In addition, the point of impingement upon the target of the electron (or ion) beam within the source tube can vary such that the actual point from which radiation is emitted is no longer co-axial to the tool or detector arrangement, but instead drifts radially in random azimuths (away from center).

Depending on the position that the electron/ion beam impinges upon the surface of the target plane, the distribution of the radiation field around the tool will vary. This will introduce inconsistencies into the detected count rates around the azimuth of the tool, and can detrimentally affect the accuracy of the computed density data if such geometrical variations are not accounted for. As a result, the variations in the measured data which would normally be attributable to casing, cement or formation density alone will contain a variable component of the geometric or electronic instability of the source tube itself.

However, small changes in the geometry of the source tube itself, due to thermal expansion or contraction, parasitic electronic charges causing electron beam movement, beam-spot focusing variations or target anode to collimation geometry variations, can lead to minor variations in the geometry and spectrum of the output beam of the source, directly affecting the accuracy of the formation count-rate measurement detrimentally.

Various means have been published which attempt to mitigate this issue by additional control of the source tube itself or through adaptive calibration of the formation-facing detectors. For example, US 2018/0180764 A1 teaches of an x-ray based litho-density tool for measurement of formation surrounding a borehole, wherein a reference detector is used to monitor the output of the x-ray source such that the reference detector's output effects corrects the outputs of the detectors used to measure the density of the materials surrounding the borehole in order to correct for variations in the x-ray source output.

US 7,564,948 B2 discloses a method wherein a reference detector is placed at the opposite end of a through-shielding channel (thereby collimating the primary x-ray signal) and additionally filtered via various materials to produce a bi-peak spectrum. The energy and intensity of the two peaks is then analyzed and used as a direct feedback to control either the input voltage or current, or both, of the x-ray tube in an attempt to stabilize the x-ray output.

US 7,960,687 B1 discloses a method wherein a reference detector is placed at the opposite end of an elbowed through-shielding channel (thereby collimating the primary x-ray signal) and additionally filtered via various materials to produce a multi or bi-peak spectrum. The elbow geometry is employed to help the reference detector's tendency to saturate due to the intensity of a direct primary radiation beam. The energy and intensity of the peaks is then analyzed and used as a direct feedback to control or actively modify the control voltage for the stabilization gain of the formation facing detectors' photo multiplier tubes, in an attempt to actively compensate for the instabilities in the output of the x-ray source. Somewhat controversially, the US 7,960,687 B1 patent seeks to replace the inherent gain stability of an embedded micro-isotope-based approach with an unstable x-ray source instability-based feedback gain stabilization method. The logged data will therefore be permanently modified at the detector and all record of the actual statistical output, as compared to a micro-isotope gain stabilized detector, will be lost. Consequently, any control algorithm errors could not be corrected for later (for example, at the surface). US 2017/169909 A1 relates to a measurement compensation mechanism for an electronic radiation source-based borehole logging tool that compensates for geometric variations in the direction output of an x-ray source, wherein said measurement compensation system comprising: at least one x-ray source and at least one radiation shield; at least one reference detector; and at least one borehole measuring radiation detector. US 2016/274038 A1 discloses a downhole densitometer used to determine one or more characteristics of a flowing fluid, wherein a source housing contain one or more reference x-ray detectors to monitor the output (energy and flux) of the x-ray generator tube. In WO 2013/101978 A1 multiple radiation detectors which are azimuthally spaced are disclosed to obtain an image from the output of a radiation source.

### Summary

A measurement compensation mechanism for an electronic radiation source-based borehole logging tool according to claim 1.

A method of compensating the measurement of an electronic radiation source-based borehole logging tool according to claim 4.

### Brief Description of the Drawings

Fig 1 illustrates the effect of ion-beam impingement position relative to a source-target upon the azimuthal distribution of source output radiation intensity, measured relative to the primary axis of a borehole tool housing.
Fig 2 illustrates the effect upon the measured radiation outputs of an azimuthal distribution of reference detectors located around a source target.

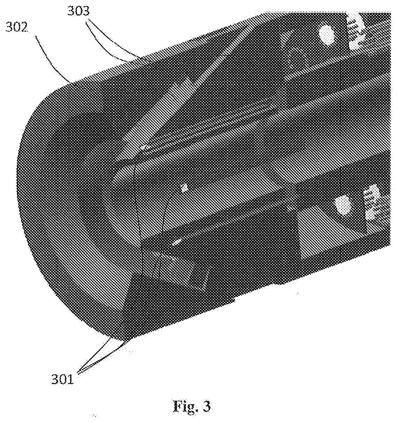

Fig 3 illustrates an example of an azimuthally distributed array of reference detectors disposed around a source-target which is configured to produce a conical beam through the use of radiation shielding within the tool but around said source-target.

### Brief Description of Several Example Embodiments

The methods and means described herein use the detected output of a plurality of azimuths of a non-isotope-based radiation source disposed tube within a borehole logging tool in order to determine accurate, constant corrections to be substituted during the computation of detector count-rate output prior to, or during, computation of the density of materials surrounding the tool.

In one example embodiment, an electronic-source-based borehole logging tool is deployed by wireline conveyance into a borehole, wherein the density of materials surrounding the borehole are measured by the tool. The tool is enclosed by a pressure housing that ensures well fluids are maintained outside of the housing.

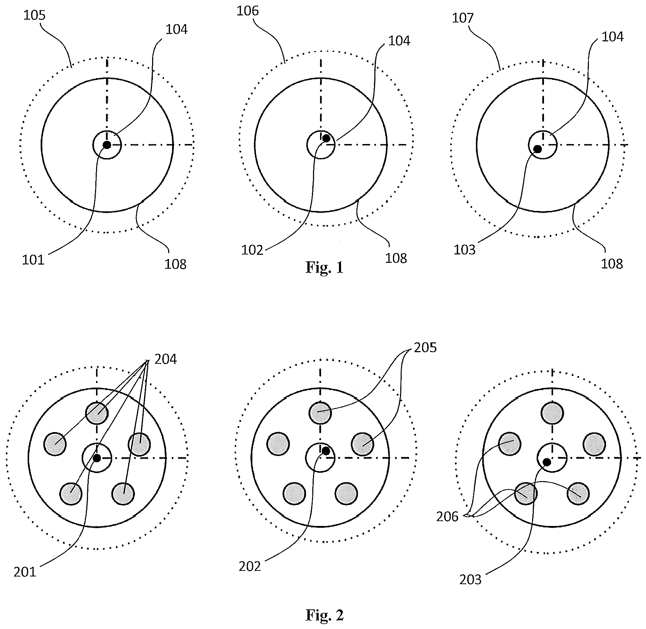

With reference now to the attached figures, Fig. 1 illustrates the effect on the azimuthal variation of output radiation relative to the location of the ion-beam upon the target anode or cathode. A circularly formed ion-beam 101 impinges coaxially/concentrically upon a target 104 located within the housing of a borehole tool 108. The resulting azimuthal distribution of output radiation 105 is also concentric relative to the tool housing 108 and source target position 104. Consequently, any changes in the radiation intensity measured by any borehole-facing radiation detectors azimuthally distributed within the tool housing 108 are the direct result of changes in the properties of the materials surrounding the borehole. If the circularly formed ion-beam 102 impinges eccentrically upon a target 104 located within the housing of a borehole tool 108. The resulting azimuthal distribution of output radiation 106 would be eccentric relative to the tool housing 108 and source target position 104. Therefore, any changes in the radiation intensity measured by any borehole-facing radiation detectors azimuthally distributed within the tool housing 108 are biased by the non-uniform distribution of the output radiation 106, and are not the direct result of changes in the properties of the materials surrounding the borehole. Alternatively, when the circularly formed ion-beam 103 impinges eccentrically upon a target 104 located within the housing of a borehole tool 108 in another location upon the target, the resulting azimuthal distribution of output radiation 107 is eccentric relative to the tool housing 108 and source target position 104. Accordingly, any changes in the radiation intensity measured by borehole-facing radiation detectors azimuthally distributed within the tool housing 108 are biased by the non-uniform distribution of the output radiation 107, and are not the direct result of changes in the properties of the materials surrounding the borehole. In all non-concentric target impingement conditions, it is difficult to determine whether the changes in detected radiation intensity are the result of borehole-material property changes (e.g., as a function of depth) or the result of variations in the ion-beam position upon the target. Depending upon the position the electron/ion beam impinges upon the surface of the target plane, the distribution of the radiation field around the tool will vary. Inconsistencies are therefore introduced into the detected count rates around the azimuth of the tool, and will detrimentally affect the accuracy of the computed density data if the geometrical variations are not accounted for.

With reference now to Fig 2, a geometric distribution of at least three detectors is used to directly monitor the radiation field being produced from a source target. For example, Fig. 2 illustrates the use of five detectors azimuthally distributed around the source target.

In one embodiment, the ion-beam 201 impinges centrally/concentrically upon the target, wherein the summation of all monitoring detectors 204 outputs should be identical, and the outputs can be used to determine the variation in the overall source output, whereas the individual monitoring detector outputs can be used to determine the geometrical shift of the source-beam upon the target, and is further used to correct the borehole-measuring detector outputs for the variation in effective azimuthal source output as a function of source-beam position upon the target.

In another embodiment, the ion-beam 202, 203 impinges eccentrically upon the target, so that the monitoring detectors 205, 206 located radially closest to the ion-beam position detect more radiation than those that are located radially more distant. The circular distribution of the detected radiation intensities measured by the monitoring detectors 204, 205, 206 are used to compute and ascribe a radial (or circular) function that forms the basis of an azimuthally distributed array of correction factors. The array of correction factors is then used to correct the outputs of any borehole-measuring detectors within the tool relative to their azimuthal location. For example, if the detected location of the ion-beam 201, 202, 203 has shifted towards the tool housing 108 in a specific azimuthal direction, then it is anticipated that the source output in that direction will be elevated compared to all other azimuthal directions. As a result, any output for a borehole-measuring detector located in that azimuthal direction will be reduced relatively in order to compensate for the ion-beam-dependent locale source output elevation in that direction, and any other borehole-measuring detector located in other azimuthal directions reduced or increased accordingly with the computed azimuthal array of correction factors.

In another embodiment, the summation of all monitoring detectors 204, 205, 206 is used to measure variations in the overall output of the electronic radiation source.

In one embodiment a circular array of monitoring detectors 301 is coaxially located around the source tube located within the tool housing 108, and not directly in the radiation beam path of the source, rather located behind shielding 303 to reduce the possibility for saturation of the detectors by illumination by an amount of radiation outside of the operating specification of the detectors. The monitoring detectors 301 are being used to monitor the electronic and geometrical variations of a conically formed radiation beam within a conical collimation 302 formed by the conical surfaces of the radiation shielding 303 around the ion-source.

In one example embodiment, a number reference detectors comprising a scintillator crystal (such as Sodium Iodide, Cesium Iodide, or Lanthanum Bromide) or a direct-conversion crystal (such as Cadmium Telluride or Cadmium Zinc Telluride) with an embedded micro-isotope, used to stabilize detector gain, is located within the radiation shielding surrounding a source tube, each located in equally spaced azimuthal positions, thereby forming a radially symmetric arrangement around the radiation source.

In another embodiment, there are five reference detectors, all of which are located upon the same transverse plane, offset around 72 degrees from each other, while located upon the same coaxially located circumference around the radiation source emitter, but not necessarily upon the same transverse plane as the emitter.

In another embodiment, there are two reference detectors, all of which are located upon the same transverse plane, offset 120 degrees from each other, while located upon the same coaxially located circumference around the radiation source emitter but not necessarily upon the same transverse plane as the emitter.

In a further embodiment, a geometric distribution of the detectors 301 is used to monitor the radiation field being produced from source target. A summation of the monitoring detector outputs is used to determine the variation in the overall source output (intensity), whereas the individual monitoring detector outputs can be used to determine the geometrical shift of the source-beam upon the target and be further used to correct the casing/cement/formation detector outputs for the variation in effective azimuthal source output as a function of source-beam position upon the target. In this respect, the output of the detectors being used to measure casing, cement and formation (detecting counts from various depths of investigation) can be amended in real-time to correct for any geometric or electronic variations in the source beam distribution.

In another embodiment, the tool is located within a logging-while-drilling (LWD) string, rather than conveyed by wireline.

In another embodiment, the LWD provisioned tool is powered by mud turbines.

In another embodiment, the tool is combinable with other measurement tools such as neutron-porosity, natural gamma and/or array induction tools.

The foregoing specification is provided only for illustrative purposes, and is not intended to describe all possible aspects of the present invention. While the invention has herein been shown and described in detail with respect to several embodiments, those of ordinary skill in the art will appreciate that minor changes to the description, and various other modifications, omissions and additions may also be made without departing from the scope of the invention as defined by the appended claims.

## Claims

1. A measurement compensation mechanism for an electronic radiation source-based borehole logging tool that compensates for geometric variations in the direction output of an electronic radiation source, said measurement compensation mechanism comprising:
at least one electronic radiation source;
at least one radiation shield; and
at least one borehole measuring radiation detector,
**characterized by**
at least three reference detectors configured to measure from the output radiation of the at least one electronic radiation source the azimuthal distribution of radiation intensities equidistant from that electronic radiation source,
wherein said mechanism is configured to use the measured azimuthal distribution of radiation intensities equidistant from the at least one electronic radiation source to correct the measured radiation value of the at least one borehole-measuring radiation detector relative to said borehole-measuring radiation detector's azimuthal measurement direction.

2. The measurement compensation mechanism of claim 1, wherein the electronic radiation source is an x-ray source.

3. The measurement compensation mechanism of claim 1, wherein the electronic radiation source is a pulsed neutron source.

4. A method of compensating the measurement of an electronic radiation source based borehole logging tool that compensates for geometric variations in the direction output of the electronic radiation source, said method comprising:
measuring from the output radiation of the electronic radiation source an azimuthal distribution of radiation intensities equidistant from that electronic radiation source, by means of at least three reference detectors, in order to correct, by means of the measurement compensation mechanism of claim 1, a measured radiation value of a borehole-measuring radiation detector relative to said borehole-measuring radiation detector's azimuthal measurement direction.

5. The method of claim 4, wherein the source is an x-ray source.

6. The method of claim 4, wherein the source is a pulsed neutron source.

## Patentansprüche

1. Mechanismus zur Messungskompensation für ein auf einer elektronischen Strahlungsquelle basierendes Bohrlochmessgerät, das geometrische Abweichungen in der Richtungsausgabe einer elektronischen Strahlungsquelle kompensiert, wobei der genannte Mechanismus zur Messungskompensation umfasst:
mindestens eine elektronische Strahlungsquelle;
mindestens einen Strahlungsschild; und
mindestens einen Bohrlochvermessungs-Strahlendetektor,
**gekennzeichnet durch**
mindestens drei Referenzdetektoren, die zum Messen der azimutalen Verteilung von Strahlungsintensitäten, die von dieser elektronischen Strahlungsquelle äquidistant sind, anhand der ausgegebenen Strahlung der mindestens einen elektronischen Strahlungsquelle konfiguriert sind,
wobei der genannte Mechanismus zur Verwendung der gemessenen azimutalen Verteilung von Strahlungsintensitäten, die von der mindestens einen elektronischen Strahlungsquelle äquidistant sind, zum Korrigieren des gemessenen Strahlungswerts des mindestens einen bohrlochmessenden Strahlungsdetektors relativ zu der azimutalen Messrichtung des genannten bohrlochmessenden Strahlungsdetektors konfiguriert ist.

2. Mechanismus zur Messungskompensation nach Anspruch 1, wobei die elektronische Strahlungsquelle eine Röntgenstrahlungsquelle ist.

3. Mechanismus zur Messungskompensation nach Anspruch 1, wobei die elektronische Strahlungsquelle eine gepulste Neutronenquelle ist.

4. Verfahren zur Kompensation der Messung eines auf einer elektronischen Strahlungsquelle basierenden Bohrlochmessgerätes, das geometrische Abweichungen in der Richtungsausgabe der elektronischen Strahlungsquelle kompensiert, wobei das Verfahren umfasst:
Messen einer azimutalen Verteilung von Strahlungsintensitäten, die von dieser elektronischen Strahlungsquelle äquidistant sind, anhand der ausgegebenen Strahlung der elektronischen Strahlungsquelle mithilfe von mindestens drei Referenzdetektoren, um mithilfe des Mechanismus zur Messungskompensation nach Anspruch 1 einen gemessenen Strahlungswert eines bohrlochmessenden Strahlungsdetektors relativ zu der azimutalen Messrichtung des genannten bohrlochmessenden Strahlungsdetektors zu korrigieren.

5. Verfahren nach Anspruch 4, wobei die Quelle eine Röntgenstrahlungsquelle ist.

6. Verfahren nach Anspruch 4, wobei die Quelle eine gepulste Neutronenquelle ist.

## Revendications

1. Mécanisme de compensation de mesure destiné à un outil de diagraphie de sondage fondé sur une source de rayonnement électronique, permettant de compenser les variations géométriques de la sortie de direction d'une source de rayonnement électronique, ledit mécanisme de compensation de mesure comprenant :
au moins une source de rayonnement électronique ;
au moins un écran anti-rayonnement ; et
au moins un détecteur de rayonnement de mesure de sondage,
**caractérisé par**
au moins trois détecteurs de référence conçus pour mesurer, à partir du rayonnement de sortie de la ou des sources de rayonnement électroniques, la distribution azimutale des intensités de rayonnement équidistantes de ladite ou desdites sources de rayonnement électronique,
ledit mécanisme étant conçu pour utiliser la distribution azimutale mesurée des intensités de rayonnement équidistantes de la ou des sources de rayonnement électroniques pour corriger la valeur de rayonnement mesurée du ou des détecteurs de rayonnement de mesure de sondage par rapport à la direction de mesure azimutale dudit détecteur de rayonnement de mesure de sondage.

2. Le mécanisme de compensation de mesure de la revendication 1, dans lequel la source de rayonnement électronique est une source de rayons X.

3. Le mécanisme de compensation de mesure de la revendication 1, dans lequel la source de rayonnement électronique est une source de neutrons pulsés.

4. Procédé de compensation de la mesure d'un outil de diagraphie de sondage fondé sur une source de rayonnement électronique, permettant de compenser les variations géométriques de la sortie de direction de la source de rayonnement électronique, ledit procédé comprenant :
la mesure, à partir du rayonnement de sortie de la source de rayonnement électronique, d'une distribution azimutale des intensités de rayonnement équidistantes de ladite source de rayonnement électronique, au moyen d'au moins trois détecteurs de référence, afin de corriger, au moyen du mécanisme de compensation de mesure de la revendication 1, une valeur de rayonnement mesurée d'un détecteur de rayonnement de mesure de sondage par rapport à la direction de mesure azimutale dudit détecteur de rayonnement de mesure de sondage.

5. Le procédé de la revendication 4, dans lequel la source est une source de rayons X.

6. Le procédé de la revendication 4, dans lequel la source est une source de neutrons pulsés.
